# EUROPEAN PATENT APPLICATION

(11) **EP 4 475 408 A1**
(43) Date of publication of application: **11.12.2024**
(21) Application number: 23749594.0
(22) Date of filing: 24.01.2023
(51) Int. Cl.: H02K 55/04

(54) **COOLING MEDIUM SUPPLY/DISCHARGE MECHANISM FOR SUPERCONDUCTING ROTATING ELECTRICAL MACHINE, AND SUPERCONDUCTING ROTATING ELECTRICAL MACHINE**

(30) Priority: 01.02.2022 JP 2022014273
(71) Applicant: Kabushiki Kaisha Toshiba, Tokyo 105-0023 (JP); Toshiba Energy Systems & Solutions Corporation, Saiwai-ku Kawasaki-shi Kanagawa 2120013 (JP)
(72) Inventor: MIZOGAWA, Yuki, Kawasaki-shi, Kanagawa 212-0013 (JP); NAKAYAMA, Shinya, Kawasaki-shi, Kanagawa 212-0013 (JP); FUCHIMOTO, Ryo, Kawasaki-shi, Kanagawa 212-0013 (JP); NAKAMA, Keita, Kawasaki-shi, Kanagawa 212-0013 (JP); FURUKAWA, Masahide, Kawasaki-shi, Kanagawa 212-0013 (JP)
(74) Representative: Hoffmann Eitle
(86) International application number: PCT/JP2023/002067
(87) International publication number: WO 2023/149278

(57) **Abstract**

According to one embodiment, there is provided a cooling medium supply and discharge mechanism for a superconducting rotating electrical machine. The mechanism includes: a casing (5) including a first fixed pipe (3) for use in supplying a cooling medium, and a second fixed pipe (4) for use in discharging the cooling medium and disposed so as to include at least a portion of the first fixed pipe (3); a rotor (101) including a first rotary pipe (1) configured to send the cooling medium supplied from the first fixed pipe (3) to a space where a rotor coil (101a) is present, and a second rotary pipe (2) that is disposed so as to include at least a portion of the first rotary pipe (1) and configured to send the cooling medium that has passed through the rotor coil (101a) to the second fixed pipe (4); and a seal portion (9) configured to prevent the cooling medium from leaking to an outside from between the second rotary pipe (2) and an end portion of the second fixed pipe (4). The second fixed pipe (4) is disposed so as to include a portion of the second rotary pipe (2), and a cooling medium retention space (8) in which the cooling medium is retained is formed between the included portion of the second rotary pipe (2) and a portion of the second fixed pipe (4).

## Description

### FIELD

The present invention relates to a cooling medium supply and discharge mechanism for a superconducting rotating electrical machine, and a superconducting rotating electrical machine.

### BACKGROUND

In a superconducting rotating electrical machine in which a high-temperature superconducting wire is used for a rotor coil, the rotor coil needs to be maintained in a cryogenic state, such as at a temperature of 30K, in order to maintain a superconductive state. Therefore, the superconducting rotating electrical machine is provided with a cooling medium supply and discharge mechanism for supplying a cooling medium such as helium gas, liquid helium, or liquid hydrogen into the rotor having the rotor coil and discharging the cooling medium from the rotor after the cooling medium cools the rotor coil and the like.

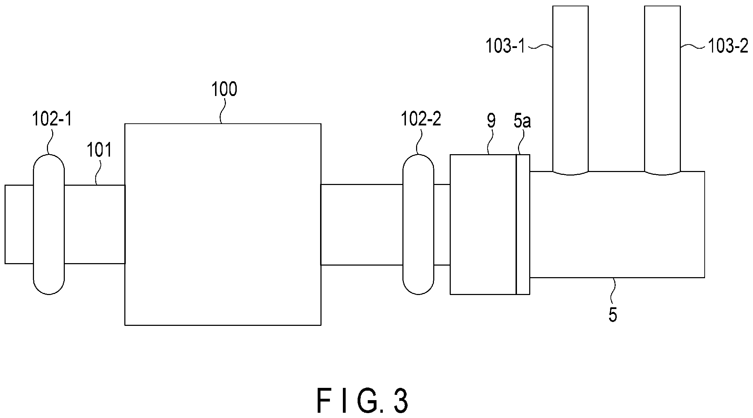

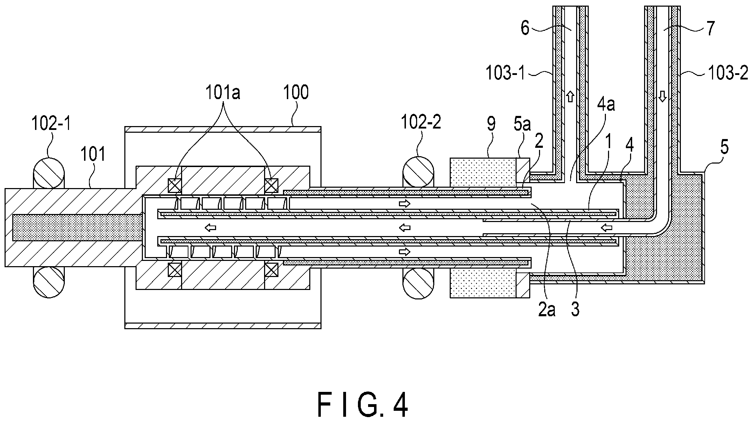

FIGS. 3 and 4 show an example of a superconducting rotating electrical machine including a conventional cooling medium supply and discharge mechanism. FIG. 3 shows an example of an outer shape of a main portion of a general superconducting rotating electrical machine, and FIG. 4 shows an example of a cross-sectional shape of a region including a cooling medium supply and discharge mechanism in the same superconducting rotating electrical machine. The portion shown by gray hatching in FIG. 4 indicates that the portion is in a vacuum.

As shown in FIG. 3, the superconducting rotating electrical machine includes a stator 100, a rotor 101, a vacuum casing 5, a magnetic fluid seal portion 9, and the like. The rotor 101 is supported by bearings 102-1 and 102-2. On the other hand, the vacuum casing 5 includes a joint (for example, a bayonet joint) 103-1 forming a cooling medium discharge line and a joint (for example, a bayonet joint) 103-2 forming a cooling medium supply line. The magnetic fluid seal portion 9 (hereinafter, abbreviated as the seal portion 9) performs sealing with a magnetic fluid, is joined to a flange portion 5a of a pipe on the vacuum casing 5 side, and is disposed so as to come into contact with an outer circumferential surface of a pipe on the rotor 101 side via the magnetic fluid.

As shown in FIG. 4, the casing 5 includes a first fixed pipe 3 and a second fixed pipe 4 that constitute a double cylindrical structure. On the other hand, the rotor 101 includes a first rotary pipe 1 and a second rotary pipe 2 that constitute a double cylindrical structure. The seal portion 9 is joined to the flange portion 5a of the second fixed pipe 4 and is disposed so as to come into contact with an outer circumferential surface of the second rotary pipe 2 via the magnetic fluid. The seal portion 9 prevents the cooling medium from leaking to an outside from between the outer circumferential surface of the second rotary pipe 2 and an end portion of the second fixed pipe 4 or the flange portion 5a (seals the gap to prevent leakage).

The cooling medium sent from a refrigerator is supplied from the cooling medium supply line 7 in the joint 103-2 to the first rotary pipe 1 through the first fixed pipe 3, supplied to a rotor core by the first rotary pipe 1, then passes through a helical groove in the rotor core while cooling a rotor coil 101a, and thereafter passes through the gap between an outer circumferential surface of the first rotary pipe 1 and an inner circumferential surface of the second rotary pipe 2. The cooling medium that has passed through this gap exits from a cooling medium discharge port 2a of the second rotary pipe 2, enters the second fixed pipe 4, and is discharged from a discharge port 4a of the second fixed pipe 4 through the cooling medium discharge line 6 in the joint 103-1.

In the cooling medium supply and discharge mechanism for the conventional superconducting rotating electrical machine, when the seal portion 9 is cooled and the magnetic fluid is frozen by the cooling medium that flows out from the cooling medium discharge port 2a of the second rotary pipe 2 and enters the second fixed pipe 4, the sealing function of the seal portion 9 may be lost and leakage of the cooling medium may occur.

To solve this problem, providing a structure for discharging the cooling medium after raising the temperature of the cooling medium (measure 1), or providing a temperature raising mechanism such as a heater or a hot water pipe around the seal portion 9 (measure 2) is considered.

However, in the structure in which the cooling medium is discharged after the temperature of the cooling medium is raised as in the measure 1, the amount of heat exchanged when the cooling medium is re-cooled and reused increases; therefore, it is necessary to increase the size of the refrigerator. Further, when liquid helium or the like is used as the cooling medium, it is difficult to reuse the cooling medium. When the temperature raising mechanism is provided around the seal portion 9 as in the measure 2, the mechanism around the seal portion 9 becomes complicated, and heat is transmitted from the heated seal portion 9 to the cooling medium, and consequently the temperature of the cooling medium rises, which causes the same problem as in the measure 1.

For this reason, it is desired to present a cooling medium supply and discharge mechanism for a superconducting rotating electrical machine and a superconducting rotating electrical machine that can suppress excessive cooling of the seal portion while suppressing the temperature rise of the cooling medium with a simple configuration.

### SUMMARY

According to one embodiment, there is provided a cooling medium supply and discharge mechanism for a superconducting rotating electrical machine. The mechanism comprises: a casing including a first fixed pipe for use in supplying a cooling medium, and a second fixed pipe for use in discharging the cooling medium and disposed so as to include at least a portion of the first fixed pipe; a rotor including a first rotary pipe configured to send the cooling medium supplied from the first fixed pipe to a space where a rotor coil is present, and a second rotary pipe that is disposed so as to include at least a portion of the first rotary pipe and configured to send the cooling medium that has passed through the rotor coil to the second fixed pipe; and a seal portion configured to prevent the cooling medium from leaking to an outside from between the second rotary pipe and an end portion of the second fixed pipe. The second fixed pipe is disposed so as to include a portion of the second rotary pipe, and a cooling medium retention space in which the cooling medium is retained is formed between the included portion of the second rotary pipe and a portion of the second fixed pipe.

According to the present invention, it is possible to suppress excessive cooling of the seal portion while suppressing the temperature rise of the cooling medium with a simple configuration.

### BRIEF DESCRIPTION OF THE DRAWING(S)

FIG. 1 is a diagram illustrating an example of a cross-sectional shape of a region of a cooling medium supply and discharge mechanism in a superconducting rotating electrical machine according to a first embodiment.
FIG. 2 is a diagram illustrating an example of a cross-sectional shape of a region of a cooling medium supply and discharge mechanism in a superconducting rotating electrical machine according to a second embodiment.
FIG. 3 is a diagram illustrating an example of an outer shape of a main portion of a general superconducting rotating electrical machine.
FIG. 4 is a diagram illustrating an example of a cross-sectional shape of a region of a cooling medium supply and discharge mechanism in a general superconducting rotating electrical machine.

### DETAILED DESCRIPTION

Hereinafter, embodiments will be described with reference to the drawings.

### (First Embodiment)

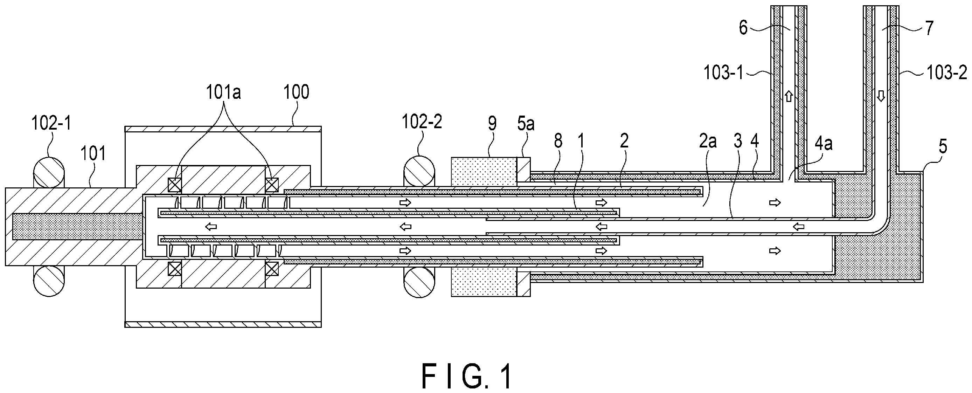

First, the first embodiment will be described with reference to FIG. 1 and also with reference to FIGS. 3 and 4 mentioned above.

An outer shape of a main portion of the superconducting rotating electrical machine according to the first embodiment is the same as that shown in FIG. 3.

That is, as shown in FIG. 3, the superconducting rotating electrical machine according to the present embodiment includes a stator 100, a rotor 101, a vacuum casing 5, a magnetic fluid seal portion 9, and the like. The rotor 101 is supported by bearings 102-1 and 102-2. On the other hand, the vacuum casing 5 includes a joint (for example, a bayonet joint) 103-1 forming a cooling medium discharge line and a joint (for example, a bayonet joint) 103-2 forming a cooling medium supply line. The magnetic fluid seal portion 9 (hereinafter, abbreviated as the seal portion 9) performs sealing with a magnetic fluid, is joined to a flange portion 5a of a pipe on the vacuum casing 5 side, and is disposed so as to come into contact with an outer circumferential surface of a pipe on the rotor 101 side via the magnetic fluid.

FIG. 1 is a diagram illustrating an example of a cross-sectional shape of a region of a cooling medium supply and discharge mechanism in a superconducting rotating electrical machine according to a first embodiment. The portion shown by gray hatching in FIG. 1 indicates that the portion is in a vacuum. In FIG. 1, the elements that are the same as those shown in FIG. 4 are denoted by the same symbols as those in FIG. 4.

As shown in FIG. 1, the casing 5 includes a first fixed pipe 3 and a second fixed pipe 4 that constitute a double cylindrical structure. Specifically, the outer diameter of the first fixed pipe 3 is smaller than the inner diameter of the second fixed pipe 4, and the first fixed pipe 3 and the second fixed pipe 4 are disposed concentrically.

The first fixed pipe 3 is used for supplying the cooling medium to the rotor 101 side. The cooling medium is supplied from a refrigerator (not shown) to the first fixed pipe 3 through a cooling medium supply line 7 in the joint 103-2.

The second fixed pipe 4 is used for discharging the cooling medium from the vacuum casing 5. The second fixed pipe 4 is disposed so as to include at least a portion of the first fixed pipe 3. The cooling medium in the second fixed pipe 4 is sent to the refrigerator through a cooling medium discharge line 6 in the joint 103-1.

On the other hand, the rotor 101 includes a first rotary pipe 1 and a second rotary pipe 2 that constitute a double cylindrical structure. Specifically, the outer diameter of the first rotary pipe 1 is smaller than the inner diameter of the second rotary pipe 2, and the first rotary pipe 1 and the second rotary pipe 2 are disposed concentrically. The first rotary pipe 1 and the second rotary pipe 2 each have a vacuum heat insulating layer on the inner side.

The first rotary pipe 1 is disposed so as to communicate with the first fixed pipe 3, and a seal (not shown) is provided between the first rotary pipe 1 and the first fixed pipe 3. The first rotary pipe 1 sends the cooling medium supplied from the first fixed pipe 3 to a space where the rotor coil (superconductive coil) 101a is located.

The second rotary pipe 2 is disposed so as to include at least a portion of the first rotary pipe 1, and sends the cooling medium passed through the rotor coil 101a to the second fixed pipe 4.

In assembling of the cooling medium supply and discharge mechanism, the first fixed pipe 3 having an outer diameter smaller than the inner diameter of the first rotary pipe 1 is inserted in the axial direction so as to be placed with a gap inside the first rotary pipe 1. The second fixed pipe 4 having an inner diameter larger than the outer diameter of the second rotary pipe 2 is inserted in the axial direction so as to be placed with a gap on the outside of the second rotary pipe 2.

The seal portion 9 is joined to the flange portion 5a of the second fixed pipe 4 and is disposed so as to come into contact with an outer circumferential surface of the second rotary pipe 2 via the magnetic fluid. The seal portion 9 prevents the cooling medium from leaking to an outside from between the outer circumferential surface of the second rotary pipe 2 and an end portion of the second fixed pipe 4 or the flange portion 5a (seals the gap to prevent leakage). The outside of the second fixed pipe 4 is covered with the vacuum casing 5 to be vacuum-insulated.

As the cooling medium used in such a cooling medium supply and discharge mechanism, liquid helium or the like that is discarded after use may be adopted, but here, a gas such as helium gas that can be reused (recirculated in the machine) without being discarded is adopted.

The cooling medium sent from the refrigerator is supplied from the cooling medium supply line 7 in the joint 103-2 to the first rotary pipe 1 through the first fixed pipe 3, supplied to a rotor core by the first rotary pipe 1, then passes through a helical groove in the rotor core while cooling a rotor coil 101a, and thereafter passes through the gap between an outer circumferential surface of the first rotary pipe 1 and an inner circumferential surface of the second rotary pipe 2. The cooling medium that has passed through this gap exits from a cooling medium discharge port 2a of the second rotary pipe 2, enters the second fixed pipe 4, and is discharged from a discharge port 4a of the second fixed pipe 4 through the cooling medium discharge line 6 in the joint 103-1.

The cooling medium discharged through the cooling medium discharge line 6 enters the refrigerator to be re-cooled, and is again sent from the cooling medium supply line 7 in the joint 103-2 to the first fixed pipe 3 to be re-circulated in the machine.

The cooling medium supply and discharge mechanism according to the first embodiment is different from the conventional cooling medium supply and discharge mechanism mainly in that the second rotary pipe 2 and the second fixed pipe 4 are configured such that a cooling medium retention space (gap) 8 in which the cooling medium is retained is present between the second rotary pipe 2 and the second fixed pipe 4. The cooling medium retention space 8 in the radial direction of the pipe is configured to have a width in the radial direction narrower than the gap between the outer circumferential surface of the first rotary pipe 1 and the inner circumferential surface of the second rotary pipe 2, and a length longer than that in the axial direction.

Specifically, the second fixed pipe 4 is disposed so as to include a portion of the second rotary pipe 2, and the cooling medium retention space 8 in which the cooling medium is retained is formed between the included portion of the second rotary pipe 2 and a portion of the second fixed pipe 4. In this case, it is assumed that an end portion of the second fixed pipe 4 on the seal portion 9 side and an end portion of the second rotary pipe 2 on the cooling medium discharge port 2a side are spaced apart from each other by a predetermined length or more in the axial direction. It is also assumed that the cooling medium discharge port 4a of the second fixed pipe 4 is located at a predetermined position in the direction in which the cooling medium is discharged from the cooling medium discharge port 2a of the second rotary pipe 2.

With this configuration, the cooling medium discharged from the cooling medium discharge port 2a of the second rotary pipe 2 is unlikely to flow into the seal portion 9, but is likely to flow directly into the cooling medium discharge port 4a of the second fixed pipe 4. In order for the cooling medium discharged from the cooling medium discharge port 2a of the second rotary pipe 2 to flow into the seal portion 9, the flow direction of the cooling medium must change (make a U-turn) and enter the cooling medium retention space 8. Even if the cooling medium enters the cooling medium retention space 8, the flow of the cooling medium stagnates, and the cooling medium in the cooling medium retention space 8 (particularly, the cooling medium around the seal portion 9) is retained. At this time, in the cooling medium retention space 8, a temperature gradient is generated from the vicinity of the end portion of the second rotary pipe 2 on the cooling medium discharge port 2a side to the seal portion 9. The temperature of the cooling medium around the seal portion 9 is higher than the temperature of the cooling medium discharged from the cooling medium discharge port 2a of the second rotary pipe 2, and is maintained at a high temperature state to the extent that the magnetic fluid does not freeze. On the other hand, the temperature of the cooling medium discharged from the cooling medium discharge port 2a of the second rotary pipe 2 is maintained at a low temperature state at which the refrigerator can perform recooling without a load.

That is, the cooling medium discharged from the cooling medium discharge port 4a of the second fixed pipe 4 does not directly cool the seal portion 9 as in the conventional case, but indirectly cools the seal portion 9 via the cooling medium retention space 8, and therefore, the seal portion is prevented from being excessively cooled. Further, the heat transmitted from the seal portion 9 to the cooling medium is not directly transmitted as in the conventional case, but is indirectly transmitted through the cooling medium retention space 8, and therefore, the temperature rise of the cooling medium is suppressed.

Since the temperature rise of the cooling medium is suppressed in this way, the amount of heat exchanged when the cooling medium is re-cooled and reused is small, the load on the refrigerator is reduced, and the refrigerator can be smaller in size. Therefore, by employing a gas such as helium gas as the cooling medium and recirculating the gas in the machine, efficient operation can be performed without discarding the cooling medium.

### (Second Embodiment)

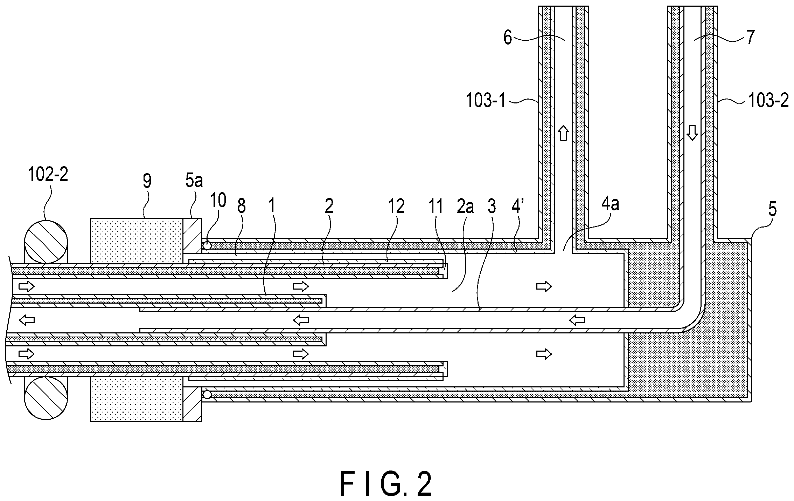

Next, a second embodiment will be described with reference to FIG. 2 in addition to the aforementioned figures.

The outer shape of the main portion of the superconducting rotating electrical machine according to the second embodiment is the same as that shown in FIG. 3, and therefore, the description thereof is omitted.

FIG. 2 is a diagram illustrating an example of a cross-sectional shape of a region of a cooling medium supply and discharge mechanism in a superconducting rotating electrical machine according to a second embodiment. The portion shown by gray hatching in FIG. 2 indicates that the portion is in a vacuum. In FIG. 2, the elements that are the same as those shown in FIG. 1 are denoted by the same symbols as those in FIG. 1. Hereinafter, portions different from those shown in FIG. 1 will be mainly described.

The cooling medium supply and discharge mechanism according to the second embodiment is different from the cooling medium supply and discharge mechanism according to the first embodiment mainly in that the second fixed pipe 4 and the second rotary pipe 2 are subjected to a treatment for further suppressing the excessive cooling of the seal portion 9.

For example, at least the inner surface of the second fixed pipe 4 is formed of fiber reinforced plastics (FRP) 4' having low heat conductivity or is covered with a resin-based heat insulating material 4 '. In addition, the second fixed pipe 4 and the vacuum casing 5 are sealed by an O-ring 10 made of a resin-based heat insulating material.

Furthermore, at least a surface of the outer surface of the second rotary pipe 2, which is in contact with the cooling medium retention space 8, is covered with a resin-based heat insulating material 12. In the example of FIG. 2, the end portion of the second rotary pipe 2 on the cooling medium discharge port 2a side is also covered with the heat insulating material 12, and the gap between the inside (vacuum heat insulating layer) and the outside of the second rotary pipe 2 is sealed at the end portion by using a cap (heat insulating cap) 11 made of a resin-based heat insulating material.

With this configuration, heat transfer through the pipe can be suppressed and the above-described temperature gradient can be reinforced, and thus excessive cooling of the seal portion 9 can be further suppressed and a rise in temperature of the cooling medium can be further suppressed.

As described above in detail, according to the embodiments, it is possible to suppress excessive cooling of the seal portion while suppressing the temperature rise of the cooling medium with a simple configuration.

While certain embodiments have been described, these embodiments have been presented by way of example only, and are not intended to limit the scope of the inventions. The novel embodiments described herein can be implemented in a variety of other forms; furthermore, various omissions, substitutions, and changes can be made without departing from the spirit of the invention. The accompanying claims and their equivalents are intended to cover such forms or modifications as would fall within the scope of the inventions.

## Claims

1. A cooling medium supply and discharge mechanism for a superconducting rotating electrical machine, the mechanism comprising:
a casing (5) including a first fixed pipe (3) for use in supplying a cooling medium, and a second fixed pipe (4) for use in discharging the cooling medium and disposed so as to include at least a portion of the first fixed pipe (3) ;
a rotor (101) including a first rotary pipe (1) configured to send the cooling medium supplied from the first fixed pipe (3) to a space where a rotor coil (101a) is present, and a second rotary pipe (2) that is disposed so as to include at least a portion of the first rotary pipe (1) and configured to send the cooling medium that has passed through the rotor coil (101a) to the second fixed pipe (4); and
a seal portion (9) configured to prevent the cooling medium from leaking to an outside from between the second rotary pipe (2) and an end portion of the second fixed pipe (4),
wherein the second fixed pipe (4) is disposed so as to include a portion of the second rotary pipe (2), and a cooling medium retention space (8) in which the cooling medium is retained is formed between the included portion of the second rotary pipe (2) and a portion of the second fixed pipe (4).

2. The cooling medium supply and discharge mechanism for a superconducting rotating electrical machine according to claim 1, wherein
the end portion of the second fixed pipe (4) on a side of the seal portion (9) and an end portion of the second rotary pipe (2) on a side of a cooling medium discharge port (2a) are spaced apart from each other by a predetermined length or more in an axial direction.

3. The cooling medium supply and discharge mechanism for a superconducting rotating electrical machine according to claim 1 or 2, wherein
a cooling medium discharge port (4a) of the second fixed pipe (4) is located at a predetermined position in a direction in which the cooling medium is discharged from a cooling medium discharge port (2a) of the second rotary pipe (2) .

4. The cooling medium supply and discharge mechanism for a superconducting rotating electrical machine according to any one of claims 1 to 3, wherein
the seal portion (9) is a magnetic fluid seal portion for sealing with a magnetic fluid.

5. The cooling medium supply and discharge mechanism for a superconducting rotating electrical machine according to any one of claims 1 to 4, wherein
the cooling medium for use in the cooling medium supply and discharge mechanism is a gas that is reusable without being discarded.

6. The cooling medium supply and discharge mechanism for a superconducting rotating electrical machine according to any one of claims 1 to 5, wherein
at least an inner surface of the second fixed pipe (4) is formed of fiber reinforced plastics (FRP).

7. The cooling medium supply and discharge mechanism for a superconducting rotating electrical machine according to any one of claims 1 to 5, wherein
at least an inner surface of the second fixed pipe (4) is covered with a heat insulating material (4').

8. The cooling medium supply and discharge mechanism for a superconducting rotating electrical machine according to any one of claims 1 to 7, wherein
at least a surface of an outer surface of the second rotary pipe (2) which is in contact with the cooling medium retention space (8) is covered with a heat insulating material (12).

9. The cooling medium supply and discharge mechanism for a superconducting rotating electrical machine according to claim 8, wherein
an end portion of the second rotary pipe (2) on a side of a cooling medium discharge port (2a) is covered with a heat insulating material (11).

10. A superconducting rotating electrical machine comprising the cooling medium supply and discharge mechanism according to any one of claims 1 to 9.
